# EUROPEAN PATENT APPLICATION

(11) **EP 3 035 732 A1**
(43) Date of publication of application: **22.06.2016**
(21) Application number: 14386033.6
(22) Date of filing: 17.12.2014
(51) Int. Cl.: H04W 28/02, H04W 28/08, H04W 88/06, H04L 12/803, H04L 12/801

(54) **Methods and apparatus to determine and react to cellular network congestion**

(71) Applicant: Google Technology Holdings LLC, Mountain View, CA 94043 (US)
(72) Inventor: Salkintzis, Apostolis, Athens, Attiki 15354 (GR)
(74) Representative: Papaconstantinou, Helen

(57) **Abstract**

Methods and apparatus for communicating between a wireless mobile communication device and a first radio access network, such as E-UTRAN are presented herein. The methods and apparatus may receive an offload preference indicator (OPI) signal from a first radio access network and store the OPI signal. The methods and apparatus may also store a congestion threshold value and a set of provisioned offload rules for routing traffic to a second radio access network. The methods and apparatus evaluate the OPI signal against the set of provisioned offload rules, determine that the first radio access network is congested if the evaluation exceeds the congestion threshold value, and reduce further congestion in the first radio access network if the first radio access network is determined to be congested.

## Description

### FIELD OF THE DISCLOSURE

The disclosure relates generally to wireless communications, and more particularly, reducing congestion in a radio access network.

### BACKGROUND

The Long Term Evolution (LTE) communication standard has been developed by the 3rd Generation Partnership Project (3GPP) to provide improved end user experience with full mobility. LTE supports IP-based traffic and provides data connectivity to users via an Evolved Packet Core (3GPP EPC) network and a radio access network called the Evolved UMTS Terrestrial Radio Access Network (E-UTRAN).

3GPP technical specification TS 23.402 (V11.1.0) specifies the stage 2 technical specification for providing connectivity between the 3GPP EPC and a wireless communication device (commonly referred to as User Equipment or UE) by using non-3GPP accesses, such as WLANs, WiMAX, etc. 3GPP TS 23.402 specifies a policy element called ANDSF (Access Network Discovery & Selection) that provides access and routing selection policies to UEs in order to inform UEs which radio access network has the highest priority for access selection and routing purposes.

Currently, wireless communication devices cannot determine if the radio access network, such as E-UTRAN, is congested. There are opportunities for a mechanism to enable wireless communication devices to identify and react to radio access network congestion, while not impacting existing 3GPP specifications.

### BRIEF DESCRIPTION OF THE DRAWINGS

The embodiments will be more readily understood in view of the following description when accompanied by the below figures and wherein like reference numerals represent like elements, wherein:
FIG. 1 is a block diagram illustrating one example of a communication system.
FIG. 2 is a block diagram illustrating one example of a network element.
FIG. 3 is a block diagram illustrating one example of a wireless communication device.
FIG. 4 is a flowchart generally illustrating an example of a method for communicating with a wireless mobile communication device.
FIG. 5 illustrates one example of an embodiment for communicating with a wireless mobile communication device.
FIG. 6 illustrates another example of an embodiment for communicating with a wireless mobile communication device.
FIG. 7 is a block diagram illustrating another example of a wireless communication device.
FIG. 8 is a flowchart generally illustrating another example of a method for communicating with a wireless mobile communication device.
FIG. 9 is a flowchart generally illustrating yet another example of a method for communicating with a wireless mobile communication device.

### DETAILED DESCRIPTION

Briefly, methods and apparatus for communicating between a wireless mobile communication device and a first radio access network, such as a 3GPP access network (e.g. E-UTRAN), are disclosed. The methods and apparatus include receiving, by a communication unit, an offload preference indicator (OPI) signal from the first radio access network. The methods and apparatus also include storing, in memory coupled to the communication unit, the OPI signal, a congestion threshold value, and a set of provisioned offload rules for routing traffic to a second radio access network, such as WLAN. The methods and apparatus include evaluating, by a processor coupled to the memory, the OPI signal against the set of provisioned offload rules. The methods and apparatus also include determining, by the processor, that the first radio access network is congested if the evaluation exceeds the congestion threshold value. The methods and apparatus include reducing, by the processor, further congestion in the first radio access network if the first radio access network is determined to be congested.

The present disclosure will be described with reference to an LTE communication system and also establishing data connectivity between a wireless communication device and a second radio access network, such as a WLAN access network. The first and second radio access networks may be configured to establish a connection to a core network of the LTE communication system (e.g. the Evolved Packet Core (3GPP EPC)). It will however be appreciated that the present disclosure may apply to second radio access networks other than WLAN, such as WiMAX or Bluetooth access networks or other wireless access networks, that can be configured to tunnel traffic from a wireless communication device to the 3GPP EPC. Furthermore, the present disclosure may apply to core networks other than a 3GPP EPC of an LTE communication system, such as packet switched domains of GPRS or UMTS communication systems or other 3GPP2 packet communication systems, or an ISP, or any other interworking access network. Describing the disclosure with respect to a core network (3GPP EPC) and a WLAN access network is not intended to limit the disclosure in any way.

The wireless communication device in accordance with the disclosure may be a portable or mobile telephone, a Personal Digital Assistant (PDA), a wireless video or multimedia device, a portable computer, a netbook, a tablet device, an embedded communication processor, or another type of wireless communication device. In the following description, the wireless communication device will be interchangeably referred to generally as user equipment (UE) or subscriber unit for illustrative purposes and it is not intended to limit the disclosure to any particular type of wireless communication device.

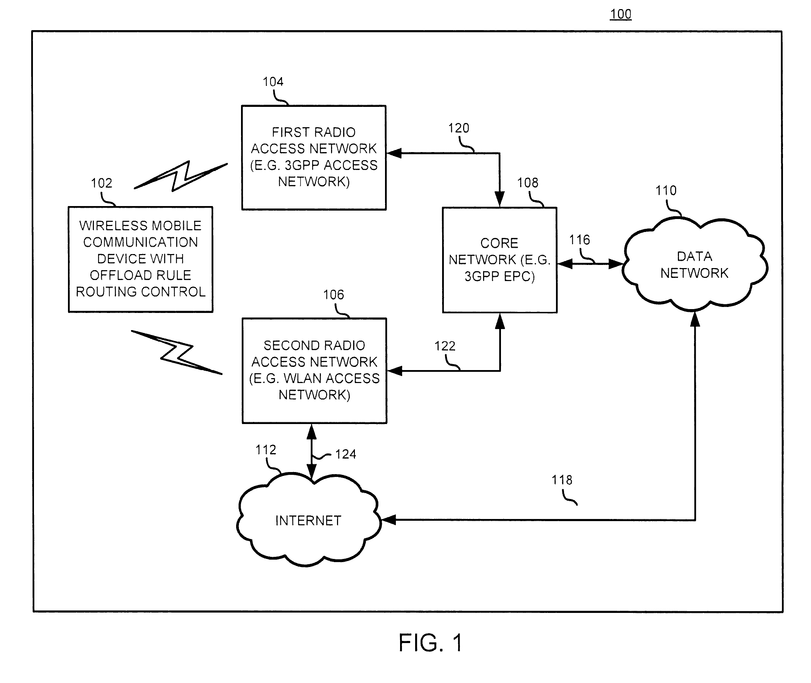

FIG. 1 is a block diagram illustrating one example of a communication system. The communication system 100 in this example has a 3GPP LTE architecture including a core network 108 (e.g. 3GPP EPC) and a first radio access network 104 (e.g. 3GPP access network), such as E-UTRAN for an LTE communication system, communicably coupled to the core network 108 via communication link 120. The communication system 100 also includes a second radio access network 106 (e.g. WLAN) communicably coupled to the core network 108 via communication link 122. A UE 102 with offload rule routing control wirelessly communicates with the first radio access network 104 and is also capable of wireless communication with the second radio access network 106. It will be appreciated that there can be a plurality of UEs and only one is shown for simplicity.

Although not shown in FIG. 1, the core network 108 includes elements such as Access Network Discovery & Selection Function (ANDSF), an authentication, authorization and accounting (AAA) server, a Home Location Register/Home Subscriber Server (HLR/HSS), and at least one PDN-GW that provides connectivity to external data networks 110, such as a network that provides MMS services, via communication link 116. One of the functions of the ANDSF element is to assist UEs to discover non-3GPP access networks, such as WLAN or WiMAX, that can be used for data communications in addition to 3GPP access networks and to provide the UE with rules policing the connection to these networks. The ANDSF may provide the UE offload rules via the first radio access network 104 or the second radio access network 106 (or both). Alternatively, the offload rules may also be provisioned in the UE at manufacture. The structure of an LTE communication system is well known in the art.

The second radio access network 106 is configured to provide or support a particular connectivity type. The second radio access network 106 has a first connectivity type when the second radio access network 106 is configured to establish a connection to the core network 108 of the LTE communications system 100 and to tunnel all data traffic from the UE 102 to the core network 108. The second radio access network 106 is configured to support a second connectivity type when the second radio access network 106 is configured to not establish a connection to the core network 108 and to provide direct access to external data networks, such as the Internet 112, via communication link 124. Data network 110 and Internet 112 may be communicatively coupled via network interconnection link 118.

The second radio access network 106 may or may not be in a different administrative domain (e.g. managed by a different operator) than the remainder of the 3GPP communications system 100.

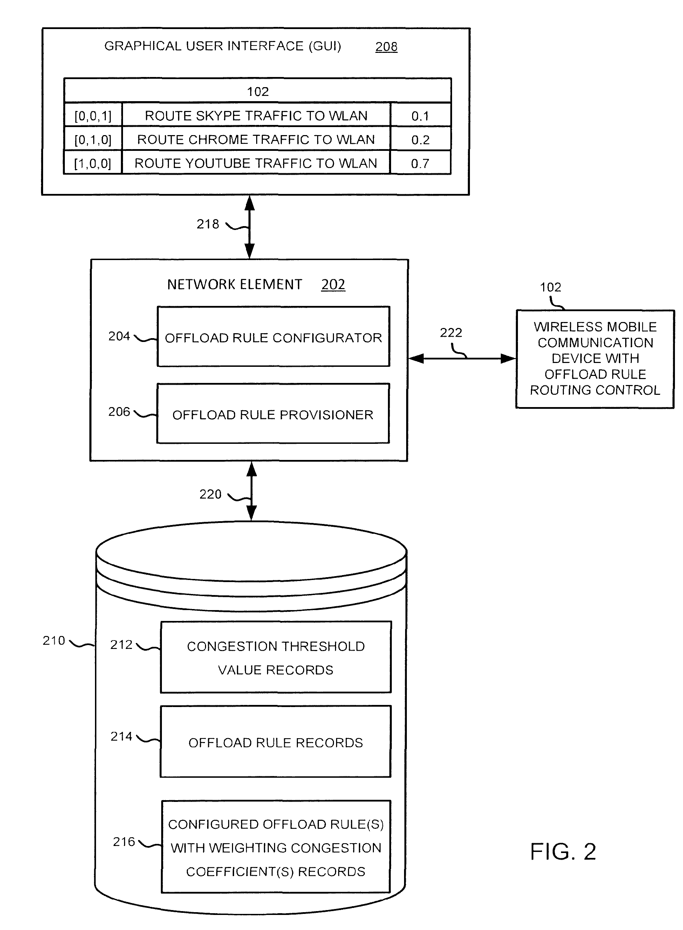

FIG. 2 is a block diagram illustrating one example of a network element 202. The network element is representative of an element that provides access and routing selection polices to UEs. The network element 202 may be located in the first radio access network 104, the second radio access network 106, or the core network 108. For illustrative purposes, the network element 202 is the ANDSF specified in 3GPP TS 23.402. Describing the network element 202 with respect to the ANDSF is not intended to limit the disclosure in any way.

An operator that has access to the network element 202 may desire to formulate offload rules in which certain kinds of data are offloaded to the second radio access network 106 when the first radio access network 104 is congested. For example, the operator may desire for UEs to offload YouTube traffic to WLAN when a 3GPP access network is congested. To do so, the operator may access an application, such as the offload rule configurator 204, and with the aid of a graphical user interface (GUI) 208, may configure a set of offload rules including at least one offload rule for provisioning into a UE. The offload rule configurator 204 may access, via communication link 220, offload rule records 214 of database 210 that stores the set of offload rules. Examples of the set of offload rules may include "Route Skype Traffic to WLAN," "Route Chrome Traffic to WLAN," "Route YouTube Traffic to WLAN," and other suitable rules. The operator may assign OPI data to index each offload rule within the set of offload rules. Further, the offload rule configurator 204 may allow the operator to assign a weighting congestion coefficient for each rule. As shown in the GUI 208, the operator may assign weighting congestion coefficient "0.1" and OPI data [0,0,1] for the rule "Route Skype Traffic to WLAN," weighting congestion coefficient "0.2" and OPI data [0,1,0] for the rule "Route Chrome Traffic to WLAN," and weighting congestion coefficient "0.7" and OPI data [1,0,0] for the rule "Route YouTube Traffic to WLAN." Although only three bits are used in the Detailed Description to represent the OPI data, the number of bits used is a matter of design choice. One of ordinary skill in the art may contemplate other forms of the OPI data in order to evaluate the OPI signal against the OPI data associated with the set of provisioned offload rules.

An offload rule provisioner 206 may access the configured offload rule(s) indicated in GUI 208 via communication link 218 and store them in configured offload rule(s) with weighting congestion coefficients(s) records 216 of the database 210, and provision the configured offload rule(s) onto the UE 102 via communication link 222. In addition, the offload rule provisioner 206 may access the congestion threshold value records 212 of the database 210 to allow the operator to provision the UE 102 with a selected congestion threshold value. In summary, the network element 202 provides configurability for UE 102 of at least one weighting congestion coefficient associated with the set of provisioned offload rules, provides configurability of a set of provisioned offload rules for routing traffic from a congested first radio access network to a second radio access network, and provides configurability of a congestion threshold value.

Open Mobile Alliance Device Management (OMA-DM) is the standards-based protocol used to provision UEs. In addition to provisioning offload rules for the UE, a congested network may use an OPI signal to indicate to the UE which services/data to offload from the congested network to another network, such as WLAN. Each bit of the OPI signal is proprietarily defined by each operator so details of the actual congestion level of a network are concealed from the UE. Although only three bits are used in the Detailed Description to represent the OPI signal, the number of bits used is a matter of design choice. One of ordinary skill in the art may contemplate other forms of the OPI signal in order to optimally evaluate the OPI signal against the set of provisioned offload rules.

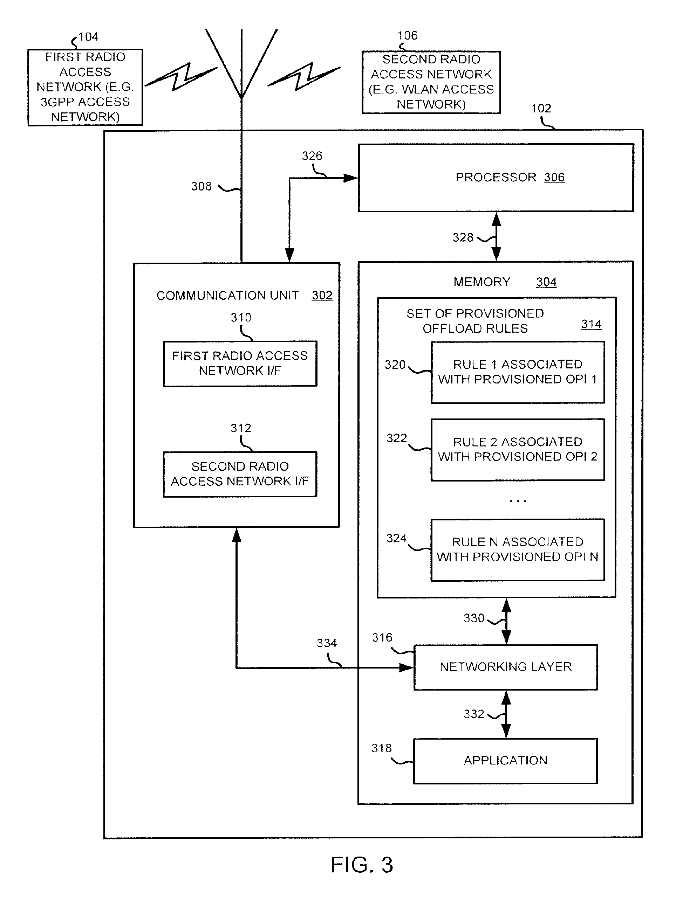

FIG. 3 is a block diagram illustrating one example of a wireless communication device, such as UE 102. As will be apparent to a person of ordinary skill in the art, FIG. 3 shows only the main functional components of an exemplary UE 102 that are necessary for an understanding of this disclosure.

The UE 102 has a processor 306 for carrying out operational processing for the UE 102. The UE 102 also has a communication unit 302 for providing wireless communication, for example, with an eNodeB (not shown) of the first radio access network 104 of the LTE communication system 100, or an access point or node (not shown) of the second radio access network 106, such as WLAN. The communication unit 302 typically includes at least one antenna 308, a receiver (not shown) and a transmitter (not shown), at least one modulation/demodulation section (not shown), and at least one coding/decoding section (not shown), for example, as will be known to a person of ordinary skill in the art and thus will not be described further. The communication unit 302 may include a first radio access network interface 310 to communicate with the first radio access network 104, and a second radio access network interface 312 to communicate with the second radio access network 106. The communication unit 302 is coupled to the processor 306 via communication link 326.

The processor 306 may be a single processor or may have two or more processors carrying out all processing required for the operation of the UE 102. The number of processors and the allocation of processing functions to the processing unit is a matter of design choice for a skilled person.

The UE 102 also has a memory 304 coupled to the processor 306 via communication link 328. The memory 304 stores programs containing processor 306 instructions for operation of the UE 102. The programs may contain a number of different program elements or sub-routines containing processor instructions for a variety of different tasks, such as processing signaling messages (e.g. control signals) received from the first radio access network 104 and second radio access network 106. Memory 304 includes a set of provisioned offload rules 314, a networking layer 316, and at least one application 318. The memory 304 is shown in FIG. 3 as separate from the processor 306, but may be a part of the processor 306.

An IP flow is typically created by matching a sequence of IP packets against the set of provisioned offload rules 314. Packets that match a particular provisioned offload rule, such as rule 1 associated with provisioned OPI 1 (320), rule 2 associated with provisioned OPI 2 (322), or rule N associated with provisioned OPI N (324), are said to belong to the same IP flow. A data source, such as application 318, generates data which is then delivered to and processed by the networking layer 316, such as an IP protocol stack, in the UE 102, via communication link 332. The processing procedure by the networking layer 316 segments the data into packets and may add header information to each packet such as IP, TCP, UDP, ICMP and HTTP headers. When these packets pass through the set of provisioned offload rules 314 via communication link 330, the networking layer 316 may check header information in each packet and direct the matched packets to the communication unit 302 via communication link 334 according to the rules. Examples of data generated by application 318 include user-initiated data such as Skype, Chrome, and YouTube, service provider services such as IP Multimedia Subsystem (IMS) (e.g. voicemail, voice over IP (VoIP) services, multimedia messaging service (MMS)), operator-hosted services such as sports, stocks, and weather, and other services with quality of service (QoS) requirements.

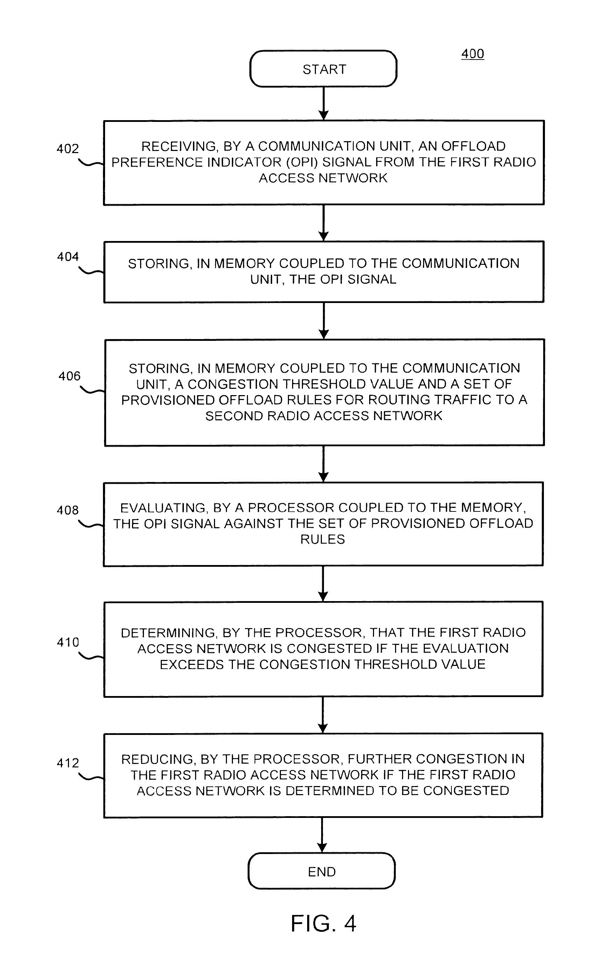

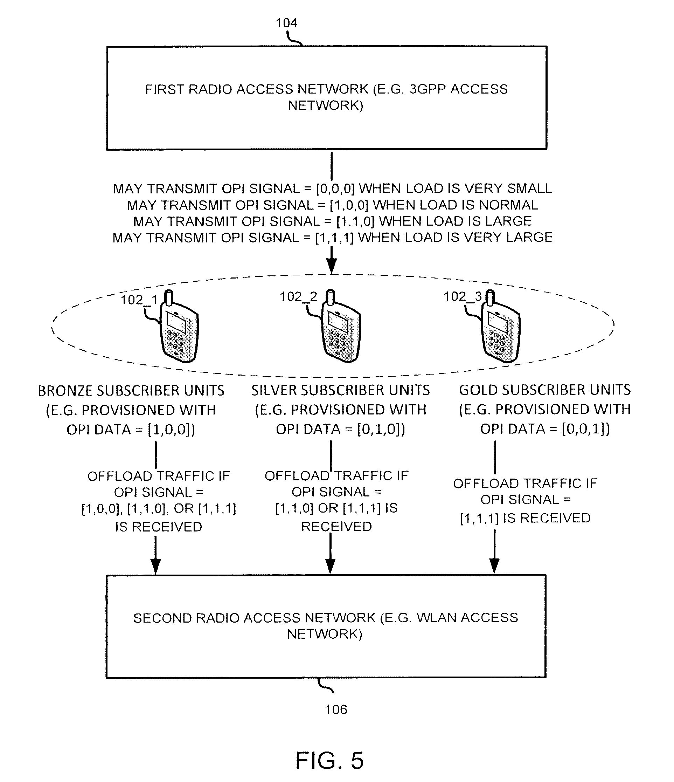

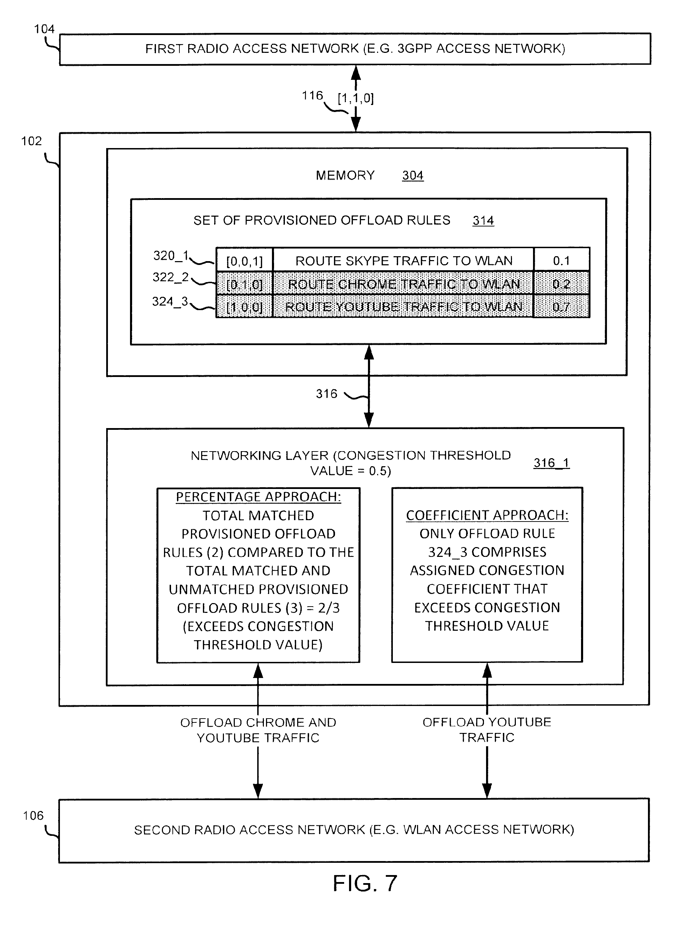

FIG. 4 is a flowchart generally illustrating an example of a method 400 for communicating with a wireless mobile communication device, such as UE 102. Particularly, method 400 may be performed by the UE 102 that includes at least a processor 306, memory 304, and a communication unit 302. As shown in FIG. 4, the method 400 includes receiving (402), by a communication unit, an OPI signal from the first radio access network. The method 400 includes storing (404), in the memory coupled to the communication unit, the OPI signal. The method 400 includes storing (406), in memory coupled to the communication unit, a congestion threshold value and a set of provisioned offload rules for routing traffic to a second radio access network. The method 400 includes evaluating (408), by the processor 306 coupled to the memory, the OPI signal stored, as described in (404), against the set of provisioned offload rules. FIG. 5 and its accompanying text will describe more details about the process of evaluating, as described in (408). The method 400 includes determining (410), by the processor 306, that the first radio access network is congested if the evaluation exceeds the congestion threshold value. FIG. 7 and its accompanying text will describe more details about the process of determining, as described (410). The method 400 includes reducing (412), by the processor 306, further congestion in the first radio access network if the first radio access network is determined to be congested. Reducing congestion may be accomplished in a variety of ways. For example, UEs can offload traffic to non-3GPP accesses, such as WLANs, to alleviate the congestion of the radio access network. If non-3GPP accesses are unavailable, the wireless communication devices may react in other ways, such as by restricting background traffic, steering traffic through a data compression proxy, blocking traffic of at least one application operating on the wireless mobile communication device, or other suitable offloading capability. As will be apparent to a person of ordinary skill in the art, although method 400 describes a particular sequence, some of the steps may be re-ordered, repeated, modified, or skipped to satisfy particular implementations. For example, (406) may occur prior to (404).

FIG. 5 illustrates one example of an embodiment for communicating with a wireless mobile communication device, such as UE 102. This embodiment supports proprietary OPI signals. In this example, the operator divides the UEs into three classes: gold 102_3 (provisioned with OPI data such as [0,0,1]), silver 102_2 (provisioned with OPI data such as [0,1,0]), and bronze 102_1 (provisioned with OPI data such as [1,0,0]). All rules for each class of subscriber units may contain a common provisioned OPI data for all rules provisioned. For example, all bronze subscriber units 102_1 may have OPI data [1,0,0] for each rule contained in the set of provisioned offload rules 314. When the eNB of the first radio access network 104 transmits an OPI signal indicative of a congestion load that is "normal," such as [1,0,0], all subscriber units in each class receive the [1,0,0] OPI signal. The subscriber units may not determine that OPI signal [1,0,0] is indicative of a "normal" congestion load, as operators may not want to disclose congestion load information to the subscriber units. The subscriber units carry out operational processing upon receiving the OPI signal. After the subscriber units perform a bit-wise AND operation using the respective provisioned OPI data and the received [1,0,0] OPI signal, only the bronze subscriber units 102_1 calculate a non-zero result, which is one way of designating only the bronze subscriber units 102_1 to offload traffic. The non-zero result may trigger the bronze subscriber units 102_1 to offload traffic to the second radio access network 106 according to the set of provisioned offload rules 314.

Similarly, when the eNB of the first radio access network 104 transmits an OPI signal indicative of a congestion load that is "large," such as [1,1,0], all subscriber units in each class receive the [1,1,0] OPI signal. The subscriber units may not determine that OPI signal [1,1,0] is indicative of a "large" congestion load, as operators may not want to disclose congestion load information to the subscriber units. The subscriber units carry out operational processing upon receiving the OPI signal. After the subscriber units perform a bit-wise AND operation using the respective provisioned OPI data and the received [1,1,0] OPI signal, both the bronze subscriber units 102_1 and silver subscriber units 102_2 (but not the gold subscriber units 102_3) provide a non-zero result, which is one way of designating the bronze and silver subscriber units to offload traffic. The non-zero result may trigger the bronze subscriber units 102_1 and silver subscriber units 102_2 to offload traffic to the second radio access network 106 according to the set of provisioned offload rules 314.

Similarly, when the eNB of the first radio access network 104 transmits an OPI signal indicative of a congestion load that is "very large," such as [1,1,1], all subscriber units in each class receive the [1,1,1] OPI signal. The subscriber units may not determine that OPI signal [1,1,1] is indicative of a "very large" congestion load, as operators may not want to disclose congestion load information to the subscriber units. The subscriber units carry out operational processing upon receiving the OPI signal. After the subscriber units perform a bit-wise AND operation using the respective provisioned OPI data and the [1,1,1] OPI signal, all subscriber units (e.g. 102_1, 102_2, and 102_3) provide a non-zero result, which is one way of designating all subscriber units in each class to offload traffic. The non-zero result may trigger all subscriber units to offload traffic to the second radio access network 106 according to the set of provisioned offload rules 314. Although bit-wise AND is described, other mathematical and logical operations may be available to perform the evaluation of the OPI signal relative to the set of provisioned offload rules.

As such, FIG. 5 illustrates one example of an embodiment for communicating with UE 102, in which all traffic, regardless of the type of traffic (e.g. Skype, Chrome, YouTube), is offloaded, because each rule associated with each type of traffic is associated with the same OPI data. However, an example of an embodiment for communicating with UE 102 in which particular types of traffic are offloaded is also contemplated.

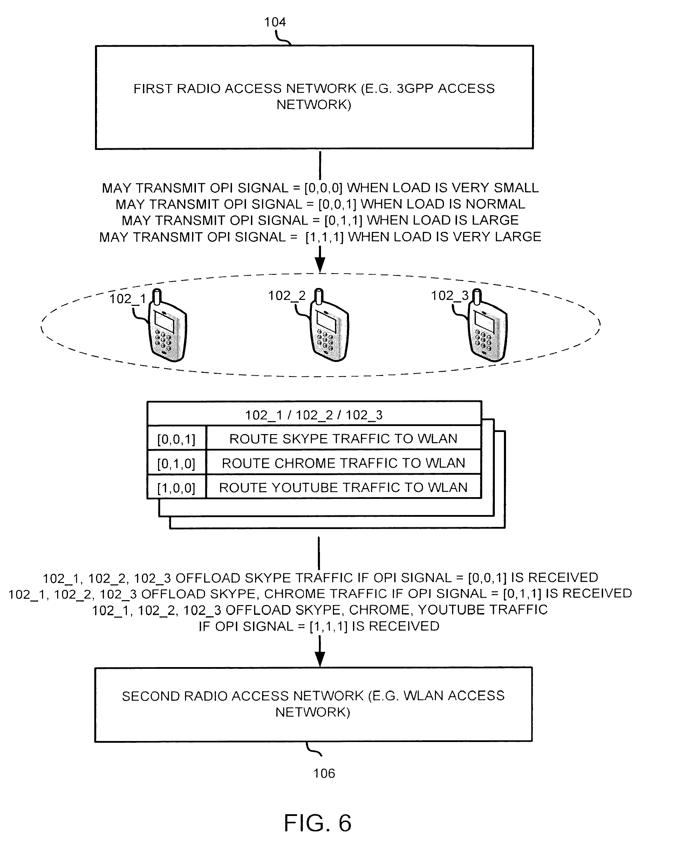

FIG. 6 illustrates one example of another embodiment for communicating with a wireless mobile communication device, such as UE 102. In this example, rather than dividing the UEs into classes, the operator configures each UE with a UE-specific set of provisioned offload rules 314. Each provisioned offload rule may contain a distinct provisioned OPI data. For instance, the operator may configure each UE (102_1, 102_2, 102_3) with the following three provisioned rules and three corresponding provisioned OPI data: "Route Skype Traffic to WLAN" with OPI data [0,0,1]," "Route Chrome Traffic to WLAN" with OPI data [0,1,0]," and "Route YouTube Traffic to WLAN" with OPI data [1,0,0]." When the eNB of the first radio access network 104 transmits an OPI signal indicative of a congestion load that is "normal," such as [0,0,1], all UEs receive the [0,0,1] OPI signal. After the UEs perform a bit-wise AND operation using the respective provisioned OPI data and the [0,0,1] OPI signal, each UE provides a non-zero result with respect to the rule "Route Skype Traffic to WLAN," which is one way of designating each UE to offload Skype traffic to WLAN. The non-zero result may trigger each UE to offload traffic according to the set of provisioned offload rules to the second radio access network 106.

Similarly, when the eNB of the first radio access network 104 transmits an OPI signal indicative of a congestion load that is "large," such as [0,1,1], all UEs receive the [0,1,1] OPI signal. After the UEs perform a bit-wise AND operation using the respective provisioned OPI data and the [0,1,1] OPI signal, each UE provides a non-zero result with respect to rules "Route Skype Traffic to WLAN" and "Route Chrome Traffic to WLAN," which is one way of designating each UE to offload Skype and Chrome traffic to WLAN. The non-zero result may trigger each UE to offload traffic according to the set of provisioned offload rules to the second radio access network 106.

Similarly, when the eNB of the first radio access network 104 transmits an OPI signal indicative of a congestion load that is "very large," such as [1,1,1], all UEs receive the [1,1,1] OPI signal. After the UEs perform a bit-wise AND operation using the respective provisioned OPI data and the [1,1,1] OPI signal, each UE provides a non-zero result with respect to rules "Route Skype Traffic to WLAN," "Route Chrome Traffic to WLAN," and "Route YouTube Traffic to WLAN," which is one way of designating each UE to offload Skype, Chrome, and YouTube traffic to WLAN. The non-zero result may trigger each UE to offload traffic according to the set of provisioned offload rules to the second radio access network 106.

FIG. 7 is a block diagram illustrating another example of a wireless communication device, such as UE 102. As will be apparent to a person of ordinary skill in the art, FIG. 7 shows only the main functional components of an exemplary UE 102 that are necessary for an understanding of the disclosure herein. The UE 102 has a networking layer 316_1 that directs packets based on two different configurations.

Under the percentage approach, if the total matched provisioned offload rules compared to the total matched and unmatched provisioned offload rules exceeds the congestion threshold value, the networking layer 316_1 directs the matched packets for offloading. A matched provisioned offload rule is defined as the provisioned offload rule having a non-zero result following a bit-wise AND operation of the received OPI signal and respective provisioned OPI data. An unmatched provisioned offload rule is defined as the provisioned offload rule having a zero result following the bit-wise AND operation of the OPI signal and respective provisioned OPI data. Other mathematical or logical operations may replace the bit-wise AND operation described above.

By way of example, the operator may provision the UE 102 with a congestion threshold value of 0.5, and a set of provisioned offload rules 314. As shown in the set of provisioned offload rules 314, the operator may assign weighting congestion coefficient "0.1" and OPI data [0,0,1] to the rule "Route Skype Traffic to WLAN" (320_1), weighting congestion coefficient "0.2" and OPI data [0,1,0] to the rule "Route Chrome Traffic to WLAN" (322_2), and weighting congestion coefficient "0.7" and OPI data [1,0,0] to the rule "Route YouTube Traffic to WLAN" (324_3). When the eNB of the first radio access network 104 transmits a [1,1,0] OPI signal wirelessly to UE 102, UE 102 performs a bit-wise AND operation using the respective provisioned OPI data of each rule and the [1,1,0] OPI signal. Rules 322_2 and 324_3 provide a non-zero result and thus are matched provisioned offload rules. Rule 320_1 provides a zero result and thus is an unmatched provisioned offload rule. Under the percentage approach, because the percentage of the total matched provisioned offload rules (2) compared to the total matched and unmatched provisioned offload rules (3) exceeds the congestion threshold value of 0.5, the networking layer 316_1 directs the matched packets corresponding to the matched provisioned offload rules 322_2 and 324_3 for offloading. This is shown by offloading Chrome and YouTube traffic to the second radio access network 106. The percentage approach disregards the weighting congestion coefficient assigned to each rule.

Under the coefficient approach, and in contrast to the percentage approach, the weighting congestion coefficient is used. If the assigned weighting congestion coefficient of the matched provisioned offload rule(s) exceeds the congestion threshold value, the networking layer 316_1 directs the matched packets for offloading. The matched provisioned offload rule is defined as a provisioned offload rule having a non-zero result following a bit-wise AND operation of the OPI signal and provisioned OPI data. Other logical or mathematical operations may replace the bit-wise AND operation. Thus, under the coefficient approach, only the matched provisioned offload rule(s) that has a weighting congestion coefficient that exceeds the congestion threshold value dictates the networking layer 316_1 for offloading. By using the same example described for the percentage approach above, the operator may provision the UE 102 with a congestion threshold value of 0.5, and a set of provisioned offload rules 314. As shown in the set of provisioned offload rules 314, the operator may assign weighting congestion coefficient "0.1" and OPI data [0,0,1] to the rule "Route Skype Traffic to WLAN" (320_1), weighting congestion coefficient "0.2" and OPI data [0,1,0] to the rule "Route Chrome Traffic to WLAN" (322_2), and weighting congestion coefficient "0.7" and OPI data [1,0,0] to the rule "Route YouTube Traffic to WLAN" (324_3). When the eNB of the first radio access network 104 transmits a [1,1,0] OPI signal wirelessly to UE 102, UE 102 performs a bit-wise AND operation using the respective provisioned OPI data of each rule and the [1,1,0] OPI signal. Rules 322_2 and 324_3 provide a non-zero result and thus are matched provisioned offload rules. Under the coefficient approach, because only rule 324_3 meets the criteria of having both a matched provisioned offload rule and a weighting congestion coefficient (0.7) that exceeds the congestion threshold value (0.5), the networking layer 316_1 directs the matched packets corresponding to the matched provisioned offload rules 324_3 for offloading. This is shown by offloading YouTube traffic to the second radio access network 106.

Although two separate approaches are described, the present disclosure is not intended to be limited to the specific approaches set forth herein, but on the contrary, it is intended to cover such alternatives, modifications, and equivalents, as can be reasonably included within the spirit and scope of the disclosure.

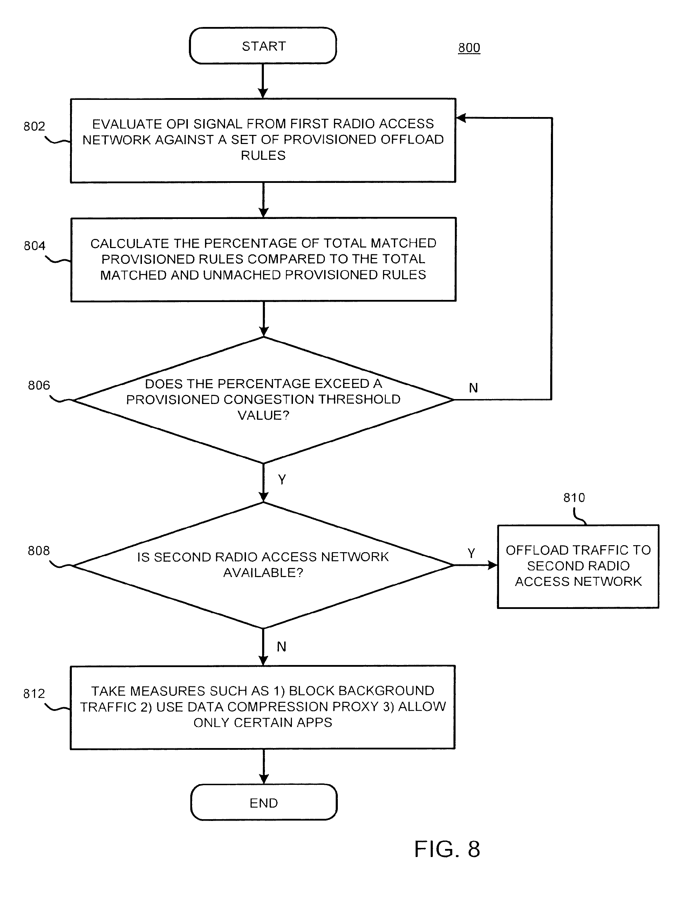

FIG. 8 is a flowchart generally illustrating another example of a method for communicating with a wireless mobile communication device, such as UE 102, that includes at least a processor 306 that uses a networking layer 316. Particularly, the method 800 of FIG. 8 may be performed by the UE 102 and implement the percentage approach example of FIG. 7. As shown in FIG. 8, the method 800 includes evaluating (802), by the processor 306, the OPI signal from the first radio access network 104 against a set of provisioned offload rules. The method 800 includes calculating (804), by the processor 306, the percentage of total matched provisioned rules compared to the total matched and unmatched provisioned rules. The method 800 includes determining (806), by the processor 306, whether the percentage exceeds a provisioned congestion threshold value. If the percentage does not exceed the provisioned congestion threshold value, the method 800 returns to (802). If the percentage does exceed the provisioned congestion threshold value, the method 800 proceeds to (808). The method 800 includes determining (808), by the processor 306, whether a second radio access network 106 is available. If the second radio access network 106 is available, the method 800 proceeds to (810). The method 800 includes offloading (810) traffic, by the processor 306 using the networking layer 316, to the second radio access network 106. If the second radio access network 106 is not available, the method 800 proceeds to (812). The method 800 includes taking (812) mitigating measures, by the processor 306 using the networking layer 316, which may lessen congestion in the first radio access network 104. For example UEs can offload traffic to non-3GPP accesses, such as WLANs, to alleviate the congestion of the radio access network. If non-3GPP accesses are unavailable, the wireless communication devices may react in other ways, such as by restricting background traffic, steering traffic through a data compression proxy, blocking traffic of at least one application operating on the wireless mobile communication device, or other suitable offloading capability. As will be apparent to a person of ordinary skill in the art, although method 800 describes a particular sequence, some of the steps may be re-ordered, repeated, modified, or skipped to satisfy particular implementations.

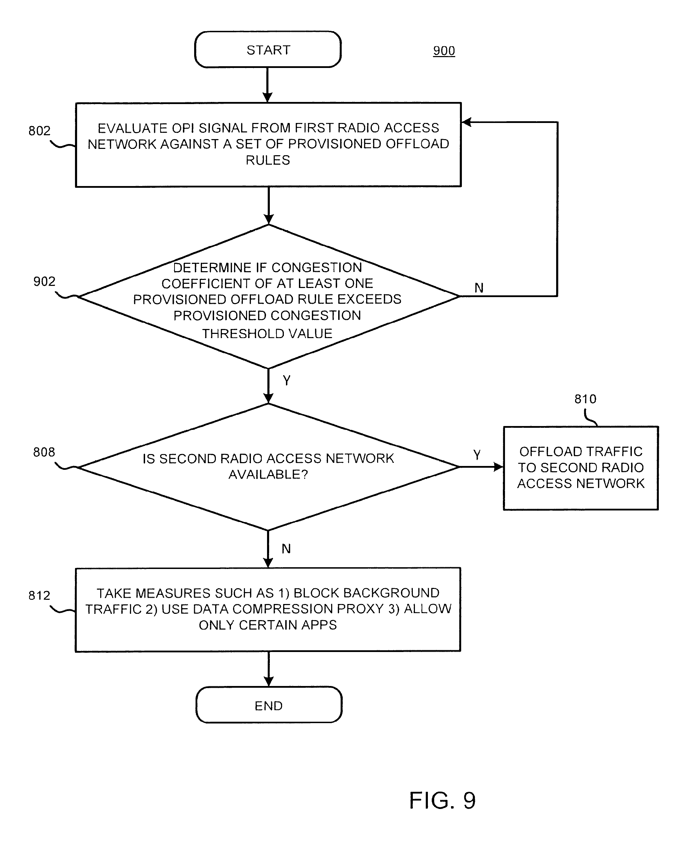

FIG. 9 is a flowchart generally illustrating another example of a method for communicating with a wireless mobile communication device, such as UE 102, that includes at least a processor 306 that uses a networking layer 316. Particularly, the method 900 of FIG. 9 may be performed by the UE 102 and implement the coefficient approach example of FIG. 7. As shown in FIG. 9, the method 900 includes evaluating (802), by the processor 306, the OPI signal from the first radio access network 104 against a set of provisioned offload rules. The method 900 includes determining (902), by the processor 306, if a congestion coefficient of a provisioned offload rule exceeds a provisioned congestion threshold value. If the congestion coefficient does not exceed the provisioned congestion threshold value, the method 900 returns to (802). If the congestion coefficient does exceed the provisioned congestion threshold value, the method 900 proceeds to (808). The method 900 includes determining (808), by the processor 306, whether a second radio access network 106 is available. If the second radio access network 106 is available, the method 900 proceeds to (810). The method 900 includes offloading (810) traffic, by the processor 306 using the networking layer 316, to the second radio access network 106. If the second radio access network 106 is not available, the method 900 proceeds to (812). The method 900 includes taking (812) mitigating measures, by the processor 306 using the networking layer 316, which may lessen congestion in the first radio access network. For example, UEs can offload traffic to non-3GPP accesses, such as WLANs, to alleviate the congestion of the radio access network. If non-3GPP accesses are unavailable, the wireless communication devices may react in other ways, such as by restricting background traffic, steering traffic through a data compression proxy, blocking traffic of at least one application operating on the wireless mobile communication device, or other suitable offloading capability. As will be apparent to a person of ordinary skill in the art, although method 900 describes a particular sequence, some of the steps may be re-ordered, repeated, modified, or skipped to satisfy particular implementations.

By providing wireless communication devices with a congestion level of the radio access network, several advantages are contemplated. Wireless communication devices can offload traffic to non-3GPP accesses, such as WLANs, to alleviate the congestion of the radio access network. If non-3GPP accesses are unavailable, the wireless communication devices may react in other ways, such as by restricting background traffic, steering traffic through a data compression proxy, blocking traffic of at least one application operating on the wireless mobile communication device, or other suitable offloading capability. In addition, the invention does not require any additional signaling other than OPI signals, protocols, or functional elements as that found in a conventional mobile communication system. Although the congestion level described is not the actual congestion of the radio access network, the invention allows operators to indicate particular UEs to reduce its traffic on the current cell. Other advantages will be recognized by those of ordinary skill in the art.

Although features and elements are described above in particular combinations, each feature or element can be used alone without the other features and elements or in various combinations with or without other features and elements. The apparatus described herein may be manufactured by using a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

In the preceding detailed description, reference has been made to the accompanying drawings which form a part thereof, and in which is shown by way of illustration specific embodiments in which the invention may be practiced. These embodiments are described in sufficient detail to enable those skilled in the art to practice the invention, and it is to be understood that other embodiments may be utilized and that logical, mechanical, chemical and electrical changes may be made without departing from the spirit or scope of the invention. To avoid detail not necessary to enable those skilled in the art to practice the invention, the description may omit certain information known to those skilled in the art. Furthermore, many other varied embodiments that incorporate the teachings of the invention may be easily constructed by those skilled in the art. Accordingly, the present invention is not intended to be limited to the specific form set forth herein, but on the contrary, it is intended to cover such alternatives, modifications, and equivalents, as can be reasonably included within the spirit and scope of the invention. The preceding detailed description is, therefore, not to be taken in a limiting sense, and the scope of the present invention is defined only by the appended claims. The above detailed description of the embodiments and the examples described therein have been presented for the purposes of illustration and description only and not by limitation. It is therefore contemplated that the present invention cover any and all modifications, variations or equivalents that fall within the spirit and scope of the basic underlying principles disclosed above and claimed herein.

## Claims

1. A wireless mobile communication device capable of communicating with a first radio access network, the wireless mobile communication device comprising:
a communication unit configured to receive an offload preference indicator (OPI) signal from the first radio access network;
memory, coupled to the communication unit, to store the OPI signal, a congestion threshold value, and a set of provisioned offload rules for routing traffic to a second radio access network;
a processor, coupled to the memory, configured to:
evaluate the OPI signal against the set of provisioned offload rules;
determine that the first radio access network is congested if the evaluation exceeds the congestion threshold value; and
reduce further congestion in the first radio access network if the first radio access network is determined to be congested.

2. The wireless communication device of claim 1, wherein the set of provisioned offload rules comprises:
at least one offload rule with an OPI data.

3. The wireless communication device of claim 2, wherein the processor further comprises:
bit-wise operational logic to compare the OPI signal with the OPI data and return a value indicating a matched provisioned offload rule or an unmatched provisioned offload rule to evaluate the OPI signal against the set of provisioned offload rules.

4. The wireless communication device of claim 3, wherein the bit-wise operational logic comprises:
a bit-wise AND operator.

5. The wireless communication device of claim 4, wherein the determination that the first radio access network is congested comprises:
determining whether a percentage of total matched provisioned offload rules compared to the total matched and unmatched provisioned offload rules exceeds the congestion threshold value,
wherein the matched provisioned offload rules comprise the at least one provisioned offload rule having a non-zero result following the bit-wise AND operation with the OPI signal and the unmatched provisioned offload rules comprise the at least one provisioned offload rule having a zero result following the bit-wise AND operation with the OPI signal.

6. The wireless communication device of claim 4, wherein the set of provisioned offload rules further comprises:
at least one assigned weighting congestion coefficient associated with the at least one offload rule with the OPI data.

7. The wireless communication device of claim 6, wherein the determination that the first radio access network is congested comprises:
determining whether the at least one assigned weighting congestion coefficient of at least one matched provisioned offload rule exceeds the congestion threshold value,
wherein the at least one matched provisioned offload rule comprises the at least one provisioned offload rule having a non-zero result following the bit-wise AND operation with the OPI signal.

8. The wireless communication device of claim 1, wherein the processor reduces further congestion by using a networking layer to offload traffic to the second radio access network when the second radio access network is available.

9. The wireless communication device of claim 8, wherein the processor uses the networking layer, when the second radio access network is available, to perform at least one of:
restricting background traffic,
steering traffic through a data compression proxy, or
blocking traffic of at least one application operating on the wireless mobile communication device.

10. The wireless communication device of claim 1, wherein the processor uses a networking layer to reduce further congestion, when the second radio access network is not detected, by at least one of:
restricting background traffic,
steering traffic through a data compression proxy, or
blocking traffic of at least one application operating on the wireless mobile communication device.

11. A method for communicating between a wireless mobile communication device and a first radio access network, the method comprising at the wireless communication device:
receiving, by a communication unit, an offload preference indicator (OPI) signal from the first radio access network;
storing, in memory coupled to the communication unit, the OPI signal, a congestion threshold value, and a set of provisioned offload rules for routing traffic to a second radio access network;
evaluating, by a processor coupled to the memory, the OPI signal against the set of provisioned offload rules;
determining, by the processor, that the first radio access network is congested if the evaluation exceeds the congestion threshold value; and
reducing, by the processor, further congestion in the first radio access network if the first radio access network is determined to be congested.

12. The method of claim 11, wherein the set of provisioned offload rules comprises:
at least one offload rule with an OPI data.

13. The method of claim 12, further comprising:
comparing, by a bit-wise operational logic of the processor, the OPI signal with the OPI data; and
returning a value indicating a matched provisioned offload rule or an unmatched provisioned offload rule to evaluate the OPI signal against the set of provisioned offload rules.

14. The method of claim 13, wherein the bit-wise operational logic comprises:
a bit-wise AND operator.

15. The method of claim 14, wherein the determination that the first radio access network is congested comprises:
determining whether a percentage of total matched provisioned offload rules compared to the total matched and unmatched provisioned offload rules exceeds the congestion threshold value,
wherein the matched provisioned offload rules comprise the at least one provisioned offload rule having a non-zero result following the bit-wise AND operation with the OPI signal and the unmatched provisioned offload rules comprise the at least one provisioned offload rule having a zero result following the bit-wise AND operation with the OPI signal.

16. The method of claim 14, wherein the set of provisioned offload rules further comprises:
at least one assigned weighting congestion coefficient associated with the at least one offload rule with the OPI data.

17. The method of claim 16, wherein the determination that the first radio access network is congested comprises:
determining whether the at least one assigned weighting congestion coefficient of at least one matched provisioned offload rule exceeds the congestion threshold value,
wherein the at least one matched provisioned offload rule comprises the at least one provisioned offload rule having a non-zero result following the bit-wise AND operation with the OPI signal.

18. The method of claim 11, further comprising:
reducing, by the processor, further congestion by using a networking layer to offload traffic to the second radio access network when the second radio access network is available.

19. The method of claim 18, carried out by the processor and the networking layer to prevent further congestion in the first radio access network, when the second radio access network is available, further comprising:
performing at least one of:
restricting background traffic,
steering traffic through a data compression proxy, or
blocking traffic of at least one application operating on the wireless mobile communication device.

20. The method of claim 18, carried out by the processor and the networking layer to prevent further congestion in the first radio access network, when the second radio access network is not detected, further comprising:
performing at least one of:
restricting background traffic,
steering traffic through a data compression proxy, or
blocking traffic of at least one application operating on the wireless mobile communication device.
